# EUROPÄISCHE PATENTSCHRIFT

(11) **EP 2 581 397 B1**
(45) Veröffentlichungstag und Bekanntmachung des Hinweises auf die Patenterteilung: **10.12.2014**
(21) Anmeldenummer: 11185177.0
(22) Anmeldetag: 14.10.2011
(51) Int. Cl.: C08G 18/08, C08G 18/34, C08G 18/38, C08G 18/48, C08G 18/67, C09D 175/16, C08G 18/10

(54) **VERFAHREN ZUR HERSTELLUNG VON NIEDRIGVISKOSEN, WASSERVERDÜNNBAREN URETHAN(METH)ACRYLATEN**
METHOD FOR PRODUCING LOW VISCOSITY, WATER SOLUBLE URETHANE(METH)ACRYLATES
PROCÉDÉ DE FABRICATION D'URÉTHANE(MÉTH)ACRYLATES POUVANT SE DISSOUDRE DANS L'EAU ET PEU VISQUEUX

(43) Veröffentlichungstag der Anmeldung: 17.04.2013
(73) Patentinhaber: Allnex IP S.à.r.l., 1660 Luxembourg (LU)
(72) Erfinder: Dr. Sommer Stefan, Leverkusen (DE); Dr. Ludewig Michael, Leverkusen (DE); Dr. Fischer Wolfgang, Leverkusen (DE); Yuva Nusret, Leverkusen (DE)
(74) Vertreter: Destryker, Elise Martine

(56) Entgegenhaltungen:
- EP-A1- 0 053 749
- EP-A1- 0 872 502
- WO-A1-2009/095432
- WO-A2-2011/073116

## Beschreibung

Die vorliegende Erfindung betrifft ein Verfahren zur Herstellung von hochreaktiven, niedrigviskosen und wasserverdünnbaren Umsetzungsprodukten von Polyisocyanaten, die aktivierte unter Einwirkung aktinischer Strahlung mit ethylenisch ungesättigten Verbindungen unter Polymerisation reagierende Gruppen enthalten. Die vorliegende Erfindung betrifft weiterhin ein Verfahren zur Herstellung solcher Produkte sowie ihre Verwendung.

Die Härtung von aktivierten Doppelbindungen tragenden Beschichtungssystemen durch aktinische Strahlung ist bekannt und technisch etabliert. Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999). Es ist eine der schnellsten Härtungsmethoden in der Beschichtungstechnologie. Auf diesem Prinzip basierende Beschichtungsmittel werden daher als strahlen- oder aktinisch-härtende bzw. härtbare Systeme bezeichnet.

Bedingt durch die ökologischen und ökonomischen Anforderungen an moderne Lacksysteme möglichst wenig oder gar kein organisches Lösungsmittel zur Viskositätseinstellung zu verwenden, besteht der Wunsch, einerseits bereits niedrigviskose Lackrohstoffe zu verwenden und anderseits darüber hinaus notwendige Viskositätseinstellungen mit Wasser als Lösemittel durchführen zu können.

Weitverbreitete, in ihrer Viskosität durch Wasser eingestellte Systeme sind Polyurethandispersionen, die sich auch als strahlenhärtbare Rohstoffe etabliert haben. Allerdings sind Dispersionen durch den notwendigen Dispergierschritt schwieriger herzustellen, und haben in der Regel nur einen geringen Festkörpergehalt von 30 bis 50 Gew.-%. Der hohe Wassergehalt dieser Dispersionen muss nach der Applikation und vor der Aushärtung wieder entfernt werden. Daher reduziert sich einerseits die mögliche Auftragsdicke des Materials und andererseits ist eine längere Ablüftungszeit erforderlich.

Es sind auch wasserverdünnbare, strahlenhärtbare Polyurethanysteme bekannt geworden, mit denen es möglich ist, sehr hohe Festkörpergehalte von mehr als 80 Gew.-% zu erreichen. Dieses sind in der Regel auf Polyethylenoxidpolyolen basierende Polyurethane, die sich mit wenig Wasser zu einer klaren Lösung verdünnen lassen.

Ein solches strahlenhärtbares, wasserverdünnbares Polyurethansystem ist beispielsweise in der WO-A 2009/095432 beschrieben. Die beschriebenen Bindemittel sind zwar mit Wasser verdünnbar, allerdings sind sie nach Strahlenhärtung sehr weich und gegen Chemikalien unbeständig. Teilweise sind die Bindemittel aufgrund eines hohen Polyethergehalts bei einem Festkörpergehalt von 100 Gew.-% fest und müssen erst aufgeschmolzen werden, was sie in der Handhabbarkeit aufwendig macht.

Auch in der DE-A 102010001956 werden wasserverdünnbare, strahlenhärtbare Polyurethansysteme beschrieben. Die offenbarten Bindemittel sind ebenfalls mit Wasser verdünnbar, allerdings sind sie nach Strahlenhärtung sehr weich und gegen Chemikalien unbeständig.

Es war daher Aufgabe der vorliegenden Erfindung, ein Verfahren zur Herstellung eines strahlenhärtbaren Polyurethan(meth)acrylats zur Verfügung zu stellen, das als unverdünntes System mit einem Festkörpergehalt von 100 Gew.-% besonders niedrigviskos ist, d.h. Scherviskositäten bei 23 °C gemäß DIN EN ISO 3219 von ≤20 Pas, bevorzugt ≤15 Pas und besonders bevorzugt ≤10 Pas aufweist, und über einen weiten Bereich mit Wasser verdünnbar ist. Zudem soll das mit Wasser verdünnte strahlenhärtbare Polyurethan(meth)acrylat lagerstabil sein. Die strahlengehärteten Filme sollen eine hohe Pendelhärte aufweisen und eine ausreichende Beständigkeit gegenüber Chemikalien aufweisen.

Der Begriff "wasserverdünnbar" im Sinne der Erfindung bedeutet, dass nach Zugabe von Wasser die Viskosität der erfindungsgemäßen Polyurethan(meth)acrylate bei einem Festkörpergehalt von 70 bis 95 Gew.-% mindestens gleich, bevorzugt geringer ist als oberhalb eines Festkörpergehaltes von 95 Gew.-%. Dabei bildet sich oberhalb eines Festkörpergehaltes von 70 Gew.-% eine homogene oder disperse Phase aus. Der Festkörpergehalt wird gemäß DIN EN ISO 3251 bestimmt.

Überraschend wurde ein Verfahren zur Herstellung von wasserverdünnbaren, niedrigviskosen Polyurethan(meth)acrylaten gefunden, dadurch gekennzeichnet, dass die Polyurethan(meth)acrylate erhältlich sind durch Umsetzung der Komponenten
(a) mindestens eines oder mehrerer organischen Polyisocyanaten mit zwei Isocyanatfunktionen und
(b) mindestens eines Polyoxyalkylenpolyols auf Basis eines Startermoleküls mit mindestens drei Hydroxyfunktionen, das teilweise durch Veresterung mit (Meth)acrylsäure so umgesetzt ist, dass noch durchschnittlich 0,2 bis 1,5, bevorzugt 0,3 bis 1,3, besonders bevorzugt 0,5 bis 1,2 Hydroxyfunktionen verbleiben,
(c) optional mindestens eines Hydroxyalkyl(meth)acrylat,
(d) mindestens einer Verbindung mit mindestens einer gegenüber Isocyanat reaktiven Gruppe und mindestens einer ionischen und/oder potentiell ionischen Funktion,
(e) optional eine organische Verbindung, die eine oder zwei isocyanatreaktive Funktionen und ein Molekulargewicht von weniger als 240 g/mol aufweist,
dadurch gekennzeichnet, dass das Reaktionsprodukt der eingesetzten Komponenten einen NCO-Gehalt von weniger als 0,5 Gew.-% aufweist, und als Ausgangsverbindung keine Komponenten ausgewählt aus der Gruppe bestehend aus
(i) organischen Polyisocyanaten mit drei oder mehr Isocyanatfunktionen,
(ii) Polyoxyalkylenpolyolen, die maximal zwei Hydroxyfunktionen, aber keine weiteren durch aktinische Strahlung vernetzbare Gruppen aufweisen,
eingesetzt werden.

Ein weiterer Gegenstand der Erfindung sind wasserverdünnbare Urethan(meth)acrylate erhältlich nach dem erfindungsgemäßen Verfahren.

Ein weiterer Gegenstand der Erfindung ist die Verwendung der erfindungsgemäßen Urethan(meth)acrylate, erhältlich nach dem erfindungsgemäßen Verfahren, für die Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen.

"(Meth)acrylat" bezieht sich im Rahmen dieser Erfindung auf entsprechende Acrylat- oder Methacrylatfunktionen oder auf eine Mischung beider.

Die Komponente (a) sind Polyisocyanate ausgewählt aus der Gruppe von aromatischen, araliphatischen, aliphatischen oder cycloaliphatischen Polyisocyanaten mit zwei Isocyanatfunktionen oder Mischungen solcher Polyisocyanate. Geeignete Polyisocyanate sind beispielsweise 1,3-Cyclohexandiisocyanat, 1-Methyl-2,4-diisocyanato-cyclohexan, 1-Methyl-2,6-diisocyanato-cyclohexan, Tetramethylen-diisocyanat, 4,4'-Diisocyanatodiphenylmethan, 2,4'-Diisocyanatodiphenylmethan, 2,4-Diisocyanatotoluol, 2,6-Diisocyanatotoluol, α,α,α',α,'-Tetra-methyl-m- oder p-Xylylendiisocyanat, 1,6-Hexamethylendiisocyanat, 1-Isocyanato-3,3,5-trimethyl-5-isocyanatomethylcyclohexan (1-Isocyanato-3,3,5-trimethyl-5-isocyanatomethyl-cyclohexan oder IPDI), 4,4'-Diisocyanatodicyclohexylmethan, 1,3-Bis(isocyanato-methyl)benzol (XDI), 1,3-Bis(1-isocyanato-1-methylethyl)-benzol (TMXDI) und deren Mischungen.

Erfindungswesentlich ist der Einsatz mindestens eines Polyoxyalkylenpolyols auf der Basis von einem Startermolekül mit mindestens drei Hydroxyfunktionen, das teilweise durch Veresterung mit (Meth)acrylsäure so umgesetzt ist, dass noch durchschnittlich 0,2 bis 1,5, bevorzugt 0,3 bis 1,3, besonders bevorzugt 0,5 bis 1,2 Hydroxyfunktionen verbleiben (b). Diese Komponente führt einerseits zu einer höheren Wasserkompatibilität und trägt andererseits zu der hohen Reaktivität der erfindungsgemäßen Produkte bei. Komponente (b) sind dabei kurzkettige Polyalkylenoxidpolyole, die pro Hydroxygruppe des Startermoleküls durch durchschnittlich 0,5 bis 8,0, vorzugsweise 0,5 bis 6,0, besonders bevorzugt 0,5 bis 4,0 Alkylenoxid-Einheiten, bevorzugt Ethylenoxideinheiten, aufgebaut wurden.

Als Startermoleküle kommen niedermolekulare Polyole bis zu einem Molekulargewicht von 400 g/mol, wie beispielsweise Trimethylolethan, Trimethylolpropan, Glycerin, Pentaerythrit, Di-trimethylolpropan oder Dipentaerythrit in Frage.

Die alkoxylierten, vorzugsweise ethoxylierten, Polyole sind teilweise mit (Meth)acrylsäure, vorzugsweise Acrylsäure verestert. Dabei ist der Veresterungsgrad so gewählt, dass im Schnitt noch 0,2 bis 1,5, vorzugsweise 0,3 bis 1,3, besonders bevorzugt 0,5 bis 1,2 Hydroxgruppen pro Molekül frei bleiben und die restlichen Hydroxylgruppen mit (Meth)acrylsäure verestert sind. Die Herstellung solcher teilacrylierten alkoxylierten, vorzugsweise ethoxylierten Polyole ist z.B. in der EP-A 0900778, EP-A 0976716 oder WO-A 2003/022902 beschrieben.

Verbindungen, die unter Komponente (b) fallen, weisen bevorzugt OH-Zahlen (OHZ) von 20 bis 150 mg KOH/g, besonders bevorzugt von 40 bis 100 mg KOH/g und ganz besonders bevorzugt von 40 bis 80 mg KOH/g Substanz auf.

Die OH-Zahl wird titrimetrisch gemäß DIN 53240-2 bestimmt.

Die erfindungsgemäßen Polyurethan(meth)acrylate enthalten bevorzugt weniger als 40 Gew.-% Alkylenoxideinheiten.

Unter Hydroxyalkyl(meth)acrylaten (c) im Sinne der Erfindung werden Verbindungen verstanden, die neben (durchschnittlich) einer Hydroxyfunktion eine oder mehrere (Meth)acrylatgruppen enthalten. Die verschiedenen Funktionen sind dabei durch kurzkettige (C2-C12) lineare oder verzweigte Alkylketten verbunden. Beispiele für solche Verbindungen sind Hydroxyethyl(meth)acrylat, Hydroxypropyl(meth)acrylat, Hydroxybutyl(meth)acrylat, 3-Hydroxy-2,2-dimethylpropyl(meth)acrylat, Glycerindi(meth)acrylat, Trimethylolpropandi(meth)acrylat, Pentaerythrittri(meth)acrylat oder Dipentaerythritpenta-(meth)acrylat.

Komponente (c) ist optional, bevorzugt ist die Verwendung von Hydroxyethyl(meth)acrylat, Hydroxypropyl(meth)acrylat, Hydroxybutyl(meth)acrylat und Pentaerythrittri(meth)acrylat. Ganz besonders bevorzugt sind Hydroxyethylacrylat und Hydroxypropylacrylat.

Die Komponente (d) umfasst Verbindungen mit mindestens einer gegenüber Isocyanat reaktiven Gruppe und zusätzlich mindestens einer ionischen und/oder potentiell ionischen Gruppe. Sie wirkt auf die erfindungsgemäßen Polyurethan(meth)acrylate hydrophilierend.

Zu den hydrophilierend wirkenden Gruppen gehören ionische Gruppen (d1) und/oder die aus potentiell ionischen Gruppen (d2) hervorgehenden (beispielsweise durch Salzbildung) ionischen Gruppen (d1), die anionischer Natur (d1.1) wie beispielsweise Sulfonium-, Phosphonium-, Carboxylat-, Sulfonat-, Phosphonat-Gruppen oder kationischer Natur (d1.2) wie beispielsweise Ammonium-Gruppen sein können und/oder potentiell ionische Gruppen (d2), d.h. Gruppen, die beispielsweise durch Salzbildung in ionische Gruppen (d1) überführt werden können. Sie werden durch isocyanatreaktive Gruppen in die Makromoleküle eingebaut. Bevorzugt geeignete isocyanatreaktive Gruppen sind Hydroxyl- und Aminogruppen.

Verbindungen enthaltend potentiell ionische Gruppen (d2) umfassen Verbindungen mit potentiell anionischen Gruppen (d2.1) wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und/oder Verbindungen mit potentiell kationischen Gruppen (d2.2) wie beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Bevorzugte Verbindungen enthaltend potentiell anionische Gruppen (d2.1) sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder -butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, die Additionsprodukte von Acrylsäure an Diamine im Verhältnis 1:1, wie z. B. an Isophorondiamin (EP-A 916 647, Beispiel 1) oder an Ethylendiamin (PUD-Salz oder N-(2-Aminoethyl)-β-alanin), das Addukt von Natriumbisulfit an Buten-2-diol-1,4- Polyethersulfonat sowie das propoxylierte Addukt aus 2-Butendiol und NaHSO₃, wie in DE-A 2 446 440 auf Seite 5-9, Formel I-III beschrieben.

Besonders bevorzugte Verbindungen enthaltend potentiell ionische Gruppen (d2) sind Carboxylgruppen oder tertiäre Aminogruppen enthaltende Verbindungen mit zwei gegenüber Isocyanat reaktiven Gruppen wie beispielsweise die Additionsprodukte von Acrylsäure an Diamine im Verhältnis 1:1, wie z. B. an Isophorondiamin (EP-A 916 647, Beispiel 1) oder an Ethylendiamin (PUD-Salz oder N-(2-Aminoethyl)-β-alanin), Dimethylolpropionsäure, N-Methyldiethanolamin.

Ganz besonders bevorzugt enthält Komponente (d) als Verbindungen mit potentiell anionischen Gruppen die Additionsprodukte von Acrylsäure an Diamine im Verhältnis 1:1, wie z. B. das Additionsprodukt von Acrylsäure an Isophorondiamin (EP-A 916 647, Beispiel 1) oder an Ethylendiamin (PUD-Salz oder N-(2-Aminoethyl)-β-alanin).

Die unter Komponente (d) genannten Säuren werden durch Umsetzung mit Neutralisationsmitteln, wie z. B. Triethylamin, Ethyldiisopropylamin, Dimethylcyclohexylamin, Dimethylethanolamin, Ammoniak, N-Ethylmorpholin, LiOH, NaOH und / oder KOH in die entsprechenden Salze überführt. Der Neutralisationsgrad liegt dabei bevorzugt zwischen 50 und 125%. Der Neutralisationsgrad ist wie folgt definiert: Bei säurefunktionalisierten Polymeren als Quotient aus Base und Säure; bei basefunktionalisierten Polymeren als Quotient aus Säure und Base. Liegt der Neutralisationsgrad über 100%, so wird bei säurefunktionalisierten Polymeren mehr Base zugegeben als Säuregruppen im Polymer vorhanden sind; bei basefunktionalisierten Polymeren wird mehr Säure zugegeben als Basegruppen im Polymer vorhanden sind.

Die unter Komponente (d) genannten Basen werden durch Umsetzung mit Neutralisationsmitteln, wie z. B. anorganische Säuren, wie beispielsweise Salzsäure, Phosphorsäure und / oder Schwefelsäure, und / oder organischen Säuren, wie beispielsweise Ameisensäure, Essigsäure, Milchsäure, Methan-, Ethan- und / oder p-Toluolsulfonsäure, in die entsprechenden Salze überführt. Der Neutralisationsgrad liegt dabei bevorzugt zwischen 50 und 125%.

Die unter Komponente (d) aufgeführten Verbindungen können auch in Mischungen verwendet werden.

Basieren die erfindungsgemäßen Polyurethan(meth)acrylate auf den unter (d) genannten anionischen und/oder potentiell anionischen Verbindungen, so weisen sie eine berechnete Säurezahl von ≥3 und ≤12, bevorzugt ≥6 und ≤10 mg KOH/g Substanz auf.

Basieren die erfindungsgemäßen Polyurethan(meth)acrylate auf den unter (d) genannten kationischen und/oder potentiell kationischen Verbindungen, so weisen sie eine berechnete Aminzahl von ≥3 und ≤16, bevorzugt ≥3 und ≤12, ganz besonders bevorzugt ≥6 und ≤10 mg KOH/g Substanz auf.

Die Komponente (e) enthält organische Verbindungen, die eine oder zwei isocyanatreaktive Funktionen und ein Molekulargewicht von weniger als 240 g/mol aufweisen.

Dies können beispielsweise Alkohole sein, wie Methanol, Ethanol, 1-Propanol, 1-Butanol, 1-Pentanol, 1-Hexanol, 2-Propanol, 2-Butanol, 2-Ethylhexanol, Benzylalkohol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxy-cyclohexyl)propan), von Dimerfettsäuren abgeleitete Diole, 2,2-Dimethyl-3-hydroxy-propionsäure-(2,2-dimethyl-3-hydroxypropylester), Glycerin, Trimethylolethan, Trimethylolpropan, Trimethylolbutan und/oder Rizinusöl. Bevorzugt sind Neopentylglykol, 1,4-Butandiol, 1,4-Cyclohexandimethanol, 1,6-Hexandiol und/oder Trimethylolpropan, oder Amine, wie Benzylamin, Butylamin, Dibutylamin, Ethylendiamin, 1,6-Hexamethylendiamin, Isophorondiamin, 1,3-, 1,4-Phenylendiamin, Piperazin, 4,4'-Diphenylmethandiamin und Hydrazin.

Organische Polyisocyanate mit drei oder mehr Isocyanatfunktionen (i) sind aromatische, aliphatische und/oder cycloaliphatische Polyisocyanate mit drei oder mehr Isocyanatfunktionen. Solche Polyisocyanate sind beispielsweise 4-Isocyanatomethyl-1,8-octan-diisocyanat (Triisocyanatononan, TIN) (EP-A 928 799) sowie Homologe bzw. Oligomere der unter (a) aufgezählten Polyisocyanate mit Biuret-, Carbodiimid-, Isocyanurat-, Allophanat-, Iminooxadiazindion- und/oder Uretdiongruppen, sowie aus diesen Verbindungen bestehende Gemische.

Polyoxyalkylenpolyole, die maximal zwei Hydroxyfunktionen, aber keine weiteren durch aktinische Strahlung vernetzbare Gruppen aufweisen (ii), werden ausgehend von ein- oder zweiwertigen Alkoholen als Startermoleküle über Alkoxylierungsreaktionen mit Ethylen- und/oder Propylenoxid hergestellt (z.B. in Ullmanns Encyclopädie der technischen Chemie, 4.Auflage, Band 19, Verlag Chemie, Weinheim S. 31-38). Diese Verbindungen werden oftmals als nichtionisch hydrophilierend wirkende Verbindungen für wässrige Bindemittel eingesetzt, haben aber den Nachteil das die korrespondierenden Beschichtungen dieser Bindemittel nach der Härtung oft weich und empfindlich gegenüber mechanischen und chemischen Einflüsse bleiben.

Komponente (a) wird in Mengen von 8 bis 40 Gew.-%, bevorzugt von 8 bis 30 Gew.-% und besonders bevorzugt von 8 bis 20 Gew.-%, Komponente (b) in Mengen von 40 bis 90 Gew.-%, bevorzugt von 60 bis 90 Gew.-% und besonders bevorzugt von 80 bis 90 Gew.-%, Komponente (c) in Mengen von 0 bis 20 Gew.-%, bevorzugt von 0 bis 10 Gew.-%, Komponente (d) in Mengen von 1 bis 6 Gew.-%, bevorzugt von 1 bis 4 Gew,-%, besonders bevorzugt von 2 bis 3 Gew.-% und Komponente (e) in Mengen von 0 bis 20 Gew.-%, bevorzugt von 0 bis 10 Gew.-% eingesetzt, wobei sich die Summe der Gew.-% der Komponenten (a) bis (e) zu 100 addiert.

Die Umsetzung der isocyanathaltigen Komponenten (a) mit den isocyanatreaktiven Komponenten (b) und (e), gegebenenfalls (c) und (e) erfolgt in einer dem Fachmann an sich bekannten Urethanisierungsreaktion.

Dabei werden die isocyanathaltigen Verbindungen (a) mit den isocyanatreaktiven Komponenten (b) und (c), gegebenenfalls (c) und (e) im Äquivalentverhältnis 1:1 bis 1:1,5, bevorzugt 1:1 bis 1:1,2 und besonders bevorzugt 1:1 bis 1:1,05 umgesetzt.

Die Neutralisation der Komponente (d) kann, falls erforderlich, vor, während oder nach der Umsetzung mit Komponente (a) erfolgen.

Die Umsetzung wird bei Temperaturen von 25 bis 100 °C, vorzugsweise 40 bis 80 °C über einen Zeitraum von 2 bis 30 Stunden, vorzugsweise 4 bis 15 Stunden durchgeführt.

Dabei wird die Reaktion so lange geführt, bis ein Rest-NCO-Gehalt von weniger als 0,5, bevorzugt weniger als 0,3 Gew.-% erreicht ist.

Zur Beschleunigung der Reaktion ist es bevorzugt, Katalysatoren einzusetzen. Dazu kommen dem Fachmann an sich bekannte Urethanisierungskatalysatoren wie z.B. tertiäre Amine oder Lewis-Säuren in Frage. Beispielhaft genannt seien Organozinnverbindungen, wie z.B. Dibutylzinndiacetat, Dibutylzinndilaurat, Dibutylzinn-bis-acetoacetonat oder Zinkverbindungen, wie z.B. Zinkacetylacetonat oder Zinkoctoat. Ebenfalls denkbar ist der Einsatz von Lewis-sauren Metallverbindungen, die Molybdän, Vanadium, Zirkonium, Cäsium, Bismuth oder Wolfram enthalten.

Im erfindungsgemäßen Verfahren wird der Katalysatorkomponente, sofern mitverwendet, in Mengen von 0,001 - 5,0 Gew.-%, bevorzugt 0,001 - 0,1 Gew.-% bezogen auf Festkörpergehalt des Verfahrensprodukts eingesetzt.

Im erfindungsgemäßen Verfahren können optional an beliebiger Stelle Lösemittel oder Reaktivverdünner eingesetzt werden. Der Einsatz von Lösemitteln und/oder Reaktivverdünnern ist nicht bevorzugt.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid, wobei jedoch bevorzugt kein Lösungsmittel zugesetzt wird.

Als Reaktivverdünner können Verbindungen mitverwendet werden, die bei der UV-Härtung ebenfalls (co)polymerisieren und somit in das Polymernetzwerk eingebaut werden und gegenüber NCO-Gruppen inert sind. Solche Reaktivverdünner sind in P. K. T. Oldring (Ed.), Chemistry & Technology of UV & EB Formulations For Coatings, Inks & Paints, Vol. 2, 1991, SITA Technology, London, S. 237-285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, 1,2-Propandiol, 1,3-Propandiol, Diethylenglykol, Dipropylenglykol, die isomeren Butandiole, Neopentylglykol, 1,6-Hexandiol, 2-Ethylhexandiol und Tripropylenglykol oder auch alkoxylierte Derivate dieser Alkohole. Bevorzugte zweiwertige Alkohole sind 1,6-Hexandiol, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate. Ein geeigneter sechswertiger Alkohol ist Dipentaerythrit oder dessen alkoxylierte Derivate. Besonders bevorzugt sind die alkoxylierten Derivate der genannten drei- bis sechswertigen Alkohole.

Die erfindungsgemäßen Bindemittel werden vorzugsweise gegen vorzeitige Polymerisation stabilisiert. Daher gibt man als Bestandteil einer oder mehrerer Komponenten ((a) bis (e)) vor und/oder während der Reaktion Stabilisatoren zu, die die Polymerisation inhibieren. Beispiele für geeignete Stabilisatoren sind z.B. Phenothiazin und Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff-Gruppen chemisch an Verbindungen der Komponente a) gebunden werden können. Hierfür besonders geeignet sind 2,2,6,6-Tetramethyl-4-hydroxypiperidin-N-Oxid.

Andere Stabilisatoren wie z. B. Verbindungen der Klasse der HALS (HALS = hindered amine light stabilizers) können ebenfalls verwendet werden, sind aber nicht bevorzugt.

Zur Stabilisierung der Reaktionsmischung, insbesondere der ungesättigten Gruppen gegen vorzeitige Polymerisation, kann ein sauerstoffhaltiges Gas, bevorzugt Luft, in und/oder über das Reaktionsgemisch geleitet werden. Es ist bevorzugt, dass das Gas einen möglichst geringen Anteil an Feuchtigkeit besitzt, um unerwünschte Reaktion bei Vorhandensein von Isocyanat zu verhindern.

Während der Herstellung der erfindungsgemäßen Bindemittel kann ein Stabilisator zugesetzt werden und abschließend, um eine Langzeitstabilität zu erreichen, nochmals mit einem phenolischen Stabilisator nachstabilisiert und gegebenenfalls mit Luft das Reaktionsprodukt gesättigt werden.

Es ist bevorzugt im erfindungsgemäßen Verfahren die Stabilisatorkomponente in Mengen von 0,001 - 5,0 Gew.-%, bevorzugt 0,01 - 2,0 Gew.-% und besonders bevorzugt 0,05 - 1,0 Gew.-% bezogen auf Festkörpergehalt des Verfahrensprodukts einzusetzen.

Bevorzugt wird das erfindungsgemäße Verfahren in einem Rührreaktor durchgeführt.

Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Bevorzugt ist die IR-Spektroskopie zur Kontrolle auf noch vorhandenen freien NCO Gruppen (für aliphatische NCO-Gruppen liegt die Bande im IR-Spektrum bei ca. v = 2272 cm⁻¹).

Die nach dem erfindungsgemäßen Verfahren erhältlichen ungesättigten Urethan(meth)acrylate weisen bei einem Festkörpergehalt von 100 Gew.-% bevorzugt Scherviskositäten bei 23 °C gemäß DIN EN ISO 3219 von ≤20 Pas, besonders bevorzugt ≤15 Pas und besonders bevorzugt ≤10 Pas auf.

Bei einem Festkörpergehalt von 90 Gew.-% und einem Wassergehalt von 10 Gew.-% weisen die erfindungsgemäßen Urethan(meth)acrylate eine Scherviskosität bei 23 °C gemäß DIN EN ISO 3219 von bevorzugt ≤5 Pas und besonders bevorzugt von ≤4 Pas auf.

Bei einem Festkörpergehalt von 80 Gew.-% und einem Wassergehalt von 20 Gew.-% weisen die erfindungsgemäßen Urethan(meth)acrylate eine Scherviskosität bei 23 °C gemäß DIN EN ISO 3219 von bevorzugt ≤4 Pas und besonders bevorzugt von ≤3 Pas auf

Bei einem Festkörpergehalt von 70 Gew.-% und einem Wassergehalt von 30 Gew.-% weisen die erfindungsgemäßen Urethan(meth)acrylate eine Scherviskosität bei 23 °C gemäß DIN EN ISO 3219 von bevorzugt ≤3 Pas und besonders bevorzugt von ≤2 Pas auf.

Die erfindungsgemäßen Urethan(meth)acrylate können zur Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen verwendet werden. Im Falle der Verklebung oder Abdichtung ist allerdings Voraussetzung, dass bei UV-Strahlenhärtung mindestens eines der beiden zu verklebenden oder miteinander abzudichtenden Substrate für UV-Strahlung durchlässig, also i. d. R. transparent sein muss. Bei der Elektronenstrahlung ist auf eine hinreichende Durchlässigkeit für Elektronen zu achten. Bevorzugt ist die Verwendung in Lacken und Beschichtungen.

Ein weiterer Gegenstand der Erfindung sind Beschichtungsmittel enthaltend
A) ein oder mehrere der erfindungsgemäßen Urethan(meth)acrylate,
B) gegebenenfalls weitere von A) verschiedene Verbindungen, die unter Einwirkung aktinischer Strahlung mit ethylenisch ungesättigten Verbindungen unter Polymerisation reagierende Gruppen aufweisen,
C) gegebenenfalls weitere nicht strahlenhärtbare, wässrige Bindemittel
D) Initiatoren,
E) gegebenenfalls Wasser und/oder Lösemittel
F) gegebenenfalls Hilfs- und Zusatzstoffe.

Zu den Verbindungen der Komponente B) gehören nicht wässrige Verbindungen wie insbesondere Urethanacrylate bevorzugt auf Hexamethylendiisocyanat-, 1-Isocyanato-3,3,5-trimethyl-5-isocyanatomethyl-cyclohexan -, 4,4'-Diisocyanatodicyclohexylmethan- und/oder Trimethylhexamethylendiisocyanat-Basis, welche gegebenenfalls mit Isocyanurat-, Allophanat-, Biuret-, Uretdion- und/oder Iminooxadiazintriongruppen modifiziert sein können, welche keine gegenüber Isocyanatgruppen reaktive, aktiven Wasserstoff enthaltende Funktionen aufweisen.

Weiterhin können die bereits beschriebenen und in der Technik der strahlenhärtenden Beschichtungen bekannten Reaktivverdünner als Bestandteil von B) verwendet werden, sofern sie keine mit NCO-Gruppen reaktiven Gruppen enthalten.

Zu den Verbindungen der Komponente B) gehören auch in Wasser gelöste oder dispergierte Verbindungen wie insbesondere Dispersionen, die ungesättigte, strahlenhärtbare Gruppen enthalten, wie z. B. ungesättigte, strahlenhärtbare Gruppen enthaltende Dispersionen auf Polyester-, Polyurethan-, Polyepoxy(meth)acrylat-, Polyether-, Polyamid-, Polysiloxan-, Polycarbonat-, Polyepoxyacrylat-, Polyesteracrylat-, Polyurethan-Polyacrylat- und /oder Polyacrylatbasis. Die ungesättigten, strahlenhärtbaren Gruppen können dabei an einem der genannten Polymere gebunden vorliegen und/oder in Form von strahlenhärtbaren Monomeren, so genannten Reaktivverdünnern, dispergiert neben den genannten Polymeren vorliegen.

Zu den Verbindungen der Komponente C) gehören in Wasser gelöste oder dispergierte Verbindungen wie insbesondere Dispersionen, die keine ungesättigten, strahlenhärtbaren Gruppen enthalten, wie z. B. Dispersionen auf Polyester-, Polyurethan-, Polyether-, Polyamid-, Polysiloxan-, Polycarbonat-, Polyurethan-Polyacrylat- und /oder Polyacrylatbasis.

Insbesondere, wenn es sich bei den Komponenten B) und C) um in Wasser gelöste oder dispergierte Verbindungen wie insbesondere Dispersionen handelt, ist der Zusatz der erfindungsgemäßen, wasserverdünnbaren Urethan(meth)acrylate A) vorteilhaft, da auf diese Weise der Festkörpergehalt der Komponenten B) und C) ohne wesentlichen Anstieg der resultierenden Viskosität angehoben werden kann.

Als Initiatoren der Komponente D) für eine radikalische Polymerisation können durch Strahlung und/oder thermisch aktivierbare Initiatoren zum Einsatz kommen. Fotoinitiatoren, die durch UV- oder sichtbares Licht aktiviert werden, sind hierbei bevorzugt. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone.

Die Initiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Fotoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)peroxydicarbonat, Dialkylperoxide wie z.B. Dilaurylperoxid, Perester aromatischer oder aliphatischer Säuren wie z.B. tert.-Butylperbenzoat oder tert.-Amylperoxy 2-ethylhexanoat, anorganische Peroxide wie z. B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamid), 2,2'-Azobis{2-methyl-N-[2-(1-hydroxybutyl)]propionamide}, 2,2'-Azobis{2-methyl-N-[2-(1-hydroxybutyl)]propionamide, 2,2'-Azobis{2-methyl-N-[1,1-bis(hydroxymethyl)-2-hydroxyethyl] propionamide. Möglich sind auch hochsubstituierte 1,2-Diphenylethane (Benzpinakole), wie z. B. 3,4-Dimethyl-3,4-diphenylhexan, 1,1,2,2-Tetraphenyl-ethandiol-1,2 oder auch deren silylierten Derivate.

Es ist auch möglich eine Kombination von Fotoinitiatoren und thermisch aktivierbaren Initiatoren zu verwenden.

Als Komponente E) können optional auch Wasser und/oder organische Lösungsmittel mit verwendet werden, die dem Fachmann an sich bekannt sind. Es ist aber bevorzugt, Wasser als einziges Verdünnungsmittel einzusetzen.

Als Hilfs- und Zusatzstoffe (Komponente F) können zur Erhöhung der Wetterstabilität der gehärteten Lackschicht auch UV-Absorber und/oder HALS-Stabilisatoren enthalten sein. Bevorzugt ist eine Kombination von UV-Absorbern und HALS-Stabilisatoren. Erstere weisen vorteilhaft einen Absorptionsbereich von maximal 390 nm auf, beispielsweise UV-Absorber wie Triphenyltriazintypen (z.B. Tinuvin^{®} 400 (Ciba Spezialitätenchemie GmbH, Lampertheim, DE)), Benztriazole (z.B. Tinuvin® 622 (Ciba Spezialitätenchemie GmbH, Lampertheim, DE)) oder Oxalsäuredianilide (z. B. Sanduvor^{®} 3206 (Clariant, Muttenz, CH)). und werden in 0,5 - 3,5 Gew.-% bezogen auf Festharz zugegeben. Geeignete HALS-Stabilisatoren sind kommerziell erhältlich (Tinuvin^{®} 292 oder Tinuvin^{®} 123 (Ciba Spezialitätenchemie GmbH, Lampertheim, DE) oder Sanduvor^{®} 3258 (Clariant, Muttenz, CH). Bevorzugte Mengen sind 0,5-2,5 Gew.-% bezogen auf Festharz.

Ebenfalls können in F) weitere in der Lacktechnologie bekannte Hilfs- und Zusatzsoffe wie z.B. Pigmente einschließlich Metallic-Effektpigmente, Farbstoffe, Mattierungsmittel, Füllstoffe, Verlaufs-, Benetzungs- und Entlüftungsadditive, Slip-Additive, Nanopartikel, Anti-Vergilbungsadditive, Verdicker und Additive zur Reduktion der Oberflächenspannung sowie Vernetzer enthalten sein.

Als Vernetzter kommen bevorzugt nicht-blockierte und / oder blockierte Polyisocyanate, Polyaziridine, Polycarbodiimide sowie Melaminharze in Frage. Besonders bevorzugt sind nicht-blockierte und / oder blockierte, hydrophilierte Polyisocyanate für wässrige Beschichtungsmittel. Bevorzugt werden ≤ 20 Gew.-%, besonders bevorzugt ≤ 10 Gew.-% an festem Vernetzer auf den Festkörpergehalt des Beschichtungsmittels zugesetzt.

Das Auftragen der erfindungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Insbesondere eignen sich die erfindungsgemäßen Beschichtungsmittel zur Beschichtung von Holz, holzhaltigen Substraten, Kork und Cellulosefaser-haltigen Substraten, wie Papier oder Pappe.

Zur Aushärtung können durch Ablüften z.B. enthaltenes Wasser oder gegebenenfalls Lösemittel ganz oder teilweise entfernt werden.

Während des Ablüftens oder im Anschluss kann thermisch und/oder photochemisch ausgehärtet werden.

Falls notwendig kann die thermische Härtung bei Raumtemperatur aber auch bei erhöhter Temperatur, vorzugsweise bei 40 - 160 °C, bevorzugte bei 60 - 130 °C, besonders bevorzugte bei 80 - 110 °C erfolgen.

Bei Verwendung von Photoinitiatoren in D) erfolgt die Strahlungshärtung bevorzugt durch Einwirkung aktinischer Strahlung, beispielsweise durch Bestrahlung mit UV-Strahlung oder Tageslicht, z.B. Licht der Wellenlänge 200 bis 700 nm oder durch Bestrahlen mit energiereichen Elektronen (Elektronenstrahlung, 150 bis 300 keV). Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls möglich. Die Strahler können bauartbedingt oder durch Einsatz spezieller Filter und/oder Reflektoren so ausgestattet sein, das der Austritt eines Teils des UV-Spektrums verhindert wird. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z. B. unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörpergehalt der Beschichtung eingesetzt. Zur Härtung dieser Beschichtungen wird bevorzugt eine Dosis von 200 bis 3000 mJ/cm² gemessen im Wellenlängenbereich von 200 bis 600 nm verwendet.

Bei Verwendung von thermisch aktivierbaren Initiatoren in D) erfolgt die Härtung durch Erhöhung der Temperatur. Die thermische Energie kann dabei durch Strahlung, Wärmeleitung und/oder Konvektion in die Beschichtung eingebracht werden, wobei Üblicherweise die in der Beschichtungstechnologie gebräuchlichen Infrarot-Strahler, Nahinfrarotstrahler und/oder Öfen zum Einsatz kommen.

Es ist bevorzugt, die Aushärtung durch aktinische Strahlung vorzunehmen.

Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation und vor der Härtung durch die gängigen Methoden entfernt.

Ein weiterer Gegenstand der Erfindung ist ein Verfahren zur Herstellung von Beschichtungen von Holz, holzartigen Substraten, Kork und cellulosefaser-haltigen Substraten, dadurch gekennzeichnet, dass das erfindungsgemäße Beschichtungsmittel wie vorher beschrieben auf Holz, holzartige Substrate, Kork und cellulosefaser-haltige Substrate aufgetragen und anschließend wie vorher beschrieben gehärtet wird.

Ein weiterer Gegenstand der Erfindung sind Substrate beschichtet mit den erfindungsgemäßen Beschichtungsmitteln, die die nach dem erfindungsgemäßen Verfahren hergestellten Urethan(meth)acrylate enthalten.

### Beispiele

Alle Prozentangaben beziehen sich sofern nicht abweichend angegeben auf Gewichtsprozent.

Der NCO-Gehalt wurde jeweils gemäß DIN EN ISO 11909 titrimetrisch verfolgt.

Die Viskositätsmessungen wurden mit einem Kegel-Platte Rotationsviskosimeter, MCR 51 der Firma Anton-Paar, DE, mit einer Schergeschwindigkeit von 50 s⁻¹ nach ISO/DIS 3219:1990 durchgeführt.

Die zur Zeit der Versuchsdurchführung herrschende Umgebungstemperatur von 23 °C wird als RT bezeichnet.

Die OH-Zahl wurde gemäß DIN 53240-2 bestimmt.

Die Säurezahl wurde gemäß DIN EN ISO 2114 bestimmt.

Die Aminzahl wurde gemäß DIN 53176 bestimmt.

Der Festkörpergehalt wurde gravimetrisch nach Abdampfen aller flüchtigen Bestandteile gemäß DIN EN ISO 3251 bestimmt.

Die Haftung auf Eiche wurde mittels Gitterschnitt gemäß DIN EN ISO 2409 geprüft.

Die Pendelhärte nach König wurde auf Glas gemäß DIN EN ISO 1522 geprüft.

Die Prüfung gegen Chemikalien, wie 10%ige Natronlauge oder 48%iges Ethanol, erfolgte gemäß DIN 68861-1 und DIN EN 12720 auf einer Eichenholzplatte.

### PUD-Salz (N-(2-Aminoethyl)-β-alanin-Natriumsalz)

Analog der Herstellvorschrift in EP-A 916 647, Beispiel 1 wurden 30 g Ethylendiamin und 36 g Acrylsäure in 231 g 17,3-%iger Natronlauge hergestellt. Es entstand eine klare, farblose Lösung des PUD-Salzes mit einem Feststoffgehalt von 40 Gew-%.

### Teilacryliertes alkoxyliertes Polyol 1

In einem 4000 ml Vierhals-Glaskolben mit Rückflusskühler, beheizbarem Ölbad, mechanischem Rührer, Luftdurchleitung (2 l/h), Innenthermometer, Tropftrichter und Wasserabscheider wurden 1158 g eines Trimethylolpropan-gestarteten Ethylenoxidpolyethers mit einer OH-Zahl von 275 mg KOH/g Substanz (1,4 Ethylenoxideinheiten pro OH-Gruppe des Trimethylolpropans), 709 g Acrylsäure, 17 g p-Toluolsulfonsäure, 5 g p-Methoxyphenol und 0,4 g 2,5-Di-tert-butylhydrochinon in 724 g Isooctan vorgelegt und auf 95 °C erhitzt. Nach ca. 20 Stunden unter Rückfluss wurde eine Säurezahl von 4 mg KOH/g Substanz erhalten. Das Isooctan wurde bei niedrigerer Temperatur und vermindertem Druck abdestilliert. Anschließend wurden bei 90 °C 64 g Glycidylmethacrylat zugeben und bei 100 °C für eine weitere Stunde gerührt. Es wurde ein farbloses Harz erhalten.

### Teilacryliertes alkoxyliertes Polyol 2

In einem 4000 ml Vierhals-Glaskolben mit Rückflusskühler, beheizbarem Ölbad, mechanischem Rührer, Luftdurchleitung (2 l/h), Innenthermometer, Tropftrichter und Wasserabscheider wurden 981 g eines Trimethylolpropan-gestarteten Ethylenoxidpolyethers mit einer OH-Zahl von 255 mg KOH/g Substanz (4,2 Ethylenoxideinheiten pro OH-Gruppe des Trimethylolpropans), 213 g Acrylsäure, 8,6 g p-Toluolsulfonsäure, 3,4 g p-Methoxyphenol und 0,23 g 2,5-Di-tert-butylhydrochinon in 489 g Isooctan vorgelegt und auf 95 °C erhitzt. Nach ca. 20 Stunden unter Rückfluss wurde eine Säurezahl von 4 mg KOH/g Substanz erhalten. Das Isooctan wurde bei niedrigerer Temperatur und vermindertem Druck abdestilliert. Anschließend wurden bei 90 °C 21 g Glycidylmethacrylat zugeben und bei 100 °C für eine weitere Stunde gerührt. Es wurde ein farbloses Harz erhalten.

### Teilacryliertes alkoxyliertes Polyol 3

In einem 4000 ml Vierhals-Glaskolben mit Rückflusskühler, beheizbarem Ölbad, mechanischem Rührer, Luftdurchleitung (2 l/h), Innenthermometer und Wasserabscheider wurden 674 g Polyol R 4290 (15-fach ethoxyliertes Pentaerythrit, Perstorp Holding AB, Perstorp, SE), 935 g Polyol R 4630 (5-fach ethoxyliertes Pentaerythrit, Perstorp Holding AB, Perstorp, SE), 653 g Isooctan, 16,8 g p-Toluolsulfonsäure, 6,7 g p-Methoxyphenol, 0,45 g 2,5-Di-tert-butylhydrochinon und 751 g Acrylsäure vorgelegt und die Temperatur langsam auf den Siedepunkt des Isooctans (95-105 °C) erhöht, bis sich ein kräftiger Rückfluss einstellte. Es wurden dann ca. 125 g Wasser abgeschieden, und die Reaktion wurde beim Erreichen einer Säurezahl von 4 mg KOH/g Substanz abgebrochen. Der Wasserabscheider wurde durch eine Destillationsbrücke ersetzt und das Isooctan wurde zunächst bei Normaldruck, später bei 50 mbar abdestilliert. Anschließend wurden 76 g Epilox^{®} A-1900 (Bisphenol-A Diglycidylether, Leuna-Harze GmbH, Leuna, DE) beigemengt und ca. eine Stunde lang bei 100 °C gerührt.

**Tabelle 1: Eigenschaften der teilacrylierten Polyoxyalkylenpolyole 1-3**

| teilacryliertes Polyol | OH-Zahl [mg KOH/g] | OH-Funktionalität des Startermoleküls | OH-Funktionalität des teilacrylierten Polyols pro Molekül | Alkylenoxidgehalt [Gew.-%] |
|---|---|---|---|---|
| **1** | 50 | 3,00 | 0,46 | 37 |
| **2** | 73 | 3,00 | 1,11 | 66 |
| **3** | 117 | 4,00 | 1,21 | 48 |

### Beispiel 1: Erfindungsgemäßes, wasserverdünnbares Bindemittel

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 447 g des teilacrylierten alkoxylierten Polyols 1, 0,5 g 2,6-Di-tert-butylkresol und 0,3 g Dibutylzinndilaurat vorgelegt und auf 50 °C erwärmt. Dann wurden 61 g 1-Isocyanato-3,3,5-trimethyl-5-isocyanatomethyl-cyclohexan so zugetropft, dass eine Temperatur von 65 °C nicht überschritten wurde. Es wurde bei 60 °C nachgerührt, bis ein NCO-Wert 1,3 Gew.-% erreicht worden war, und es erfolgte die Zugabe von 29 g der Lösung des PUD-Salzes. Nach 30 Minuten war der NCO-Wert auf <0,1 Gew.-% gefallen. Es wurde ein klares, leicht gelbliches Harz erhalten.

### Beispiel 2: Erfindungsgemäßes, wasserverdünnbares Bindemittel

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 447 g des teilacrylierten alkoxylierten Polyols 1, 10,0 g Dimethylolpropionsäure, 0,5 g 2,6-Di-tert-butylkresol und 0,3 g Dibutylzinndilaurat vorgelegt und auf 50 °C erwärmt. Dann wurden 61 g 1-Isocyanato-3,3,5-trimethyl-5-isocyanatomethyl-cyclohexan so zugetropft, dass eine Temperatur von 65 °C nicht überschritten wurde. Es wurde bei 60 °C nachgerührt, bis ein NCO-Wert <0,1 Gew.-% erreicht worden war. Es wurde ein klares, leicht gelbliches Harz erhalten.

### Beispiel 3: Erfindungsgemäßes, wasserverdünnbares Bindemittel

In einem 2000 ml-Vierhals-Glaskolben mit Rückflusskühler, beheizbarem Ölbad, mechanischem Rührer, Luftdurchleitung (2 1/h), Innenthermometer und Tropftrichter wurden 531 g des teilacrylierten alkoxylierten Polyols 1, 0,5 g 2,6-Di-tert-butylkresol und 0,3 g Dibutylzinndilaurat vorgelegt und auf 50 °C erwärmt. Dann wurden 61 g 1-Isocyanato-3,3,5-trimethyl-5-isocyanatomethyl-cyclohexan so zugetropft, dass eine Temperatur von 65 °C nicht überschritten wurde. Es wurde bei 60 °C nachgerührt, bis ein NCO-Wert 0,6 Gew.-% erreicht worden war, und es erfolgte die Zugabe von 16,6 g 3-(Cyclohexylamino)propan-1-sulfonsäure und 7,6 g Triethylamin zur Neutralisation der Sulfonsäure. Nach 120 Minuten war der NCO-Wert auf <0,1 Gew.-% gefallen. Es wurde ein klares, leicht gelbliches Harz erhalten.

### Beispiel 4: Erfindungsgemäßes, wasserverdünnbares Bindemittel

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 416 g des teilacrylierten alkoxylierten Polyols 1, 0,5 g 2,6-Di-tert-butylkresol und 0,3 g Dibutylzinndilaurat vorgelegt und auf 50 °C erwärmt. Dann wurden 61 g 1-Isocyanato-3,3,5-trimethyl-5-isocyanatomethyl-cyclohexan so zugetropft, dass eine Temperatur von 65 °C nicht überschritten wurde. Es wurde bei 60 °C nachgerührt, bis ein NCO-Wert 1,5 Gew.-% erreicht worden war, und es erfolgte die Zugabe von 32 g der Lösung des PUD-Salzes. Nach 30 Minuten war der NCO-Wert auf <0,1 Gew.-% gefallen. Es wurde ein klares, leicht gelbliches Harz erhalten.

### Beispiel 5: Erfindungsgemäßes, wasserverdünnbares Bindemittel

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 402 g des teilacrylierten alkoxylierten Polyols 1, 0,5 g 2,6-Di-tert-butylkresol und 0,3 g Dibutylzinndilaurat vorgelegt und auf 50 °C erwärmt. Dann wurden 61 g 1-Isocyanato-3,3,5-trimethyl-5-isocyanatomethyl-cyclohexan so zugetropft, dass eine Temperatur von 65 °C nicht überschritten wurde. Es wurde bei 60 °C nachgerührt, bis ein NCO-Wert 1,6 Gew.-% erreicht worden war, und es erfolgte die Zugabe von 36 g der Lösung des PUD-Salzes. Nach 30 Minuten war der NCO-Wert auf <0,1 Gew.-% gefallen. Es wurde ein klares, leicht gelbliches Harz erhalten.

### Beispiel 6: Erfindungsgemäßes, wasserverdünnbares Bindemittel

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 302 g des teilacrylierten alkoxylierten Polyols 1, 94 g des teilacrylierten alkoxylierten Polyols 2, 0,5 g 2,6-Di-tert-butylkresol und 0,3 g Dibutylzinndilaurat vorgelegt und auf 50°C erwärmt. Dann wurden 61 g 1-Isocyanato-3,3,5-trimethyl-5-isocyanatomethyl-cyclohexan so zugetropft, dass eine Temperatur von 65 °C nicht überschritten wurde. Es wurde bei 60°C nachgerührk, bis ein NCO-Wert 1,3 Gew.-% erreicht worden war, und es erfolgte die Zugabe von 29 g der Lösung des PUD-Salzes. Nach 30 Minuten war der NCO-Wert auf <0,1 Gew.-% gefallen. Es wurde ein klares, leicht gelbliches Harz erhalten.

### Beispiel 7 (Vergleich): analog zu Beispiel 3 aus DE-A 102010001956

In einem 2000 ml Vierhals-Glaskolben mit Rückflusskühler, beheizbarem Ölbad, mechanischem Rührer, Luftdurchleitung (2 l/h), Innenthermometer und Tropftrichter wurden 363 g Polyethylenglykol 1000, 0,56 g Dimethylolpropionsäure, 3,8 g Neopentylglykol, 67,4 g Hydroxyethylacrylat, 192 g Dipropylenglykoldiacrylat, 0,6 g 2,6-Di-tert-butyl-4-methylphenol, 0,06 g Phenothiazin, 0,56 g Tempol, 0,03 g 2,5-Di-tert.-butylhydrochinon und 0,4 g Dibutylzinndilaurat vorgelegt und auf 60 °C erwärmt. Es wurden dann 139 g Toluoldiisocyanat (2,4- und 2,6-Toluoldiisocyanat (TDI) im Verhältnis 80 : 20) so zugetropft, dass die Temperatur von 70 °C nicht überschritten wurde. Es wurde nachgerührt, bis ein NCO-Wert von 0,3 Gew.-% erreicht war. Anschließend wurden 21,5 g Dibutylamin zugegeben und weitere zwei Stunden bei 65 °C gerührt. Abschließend wurden weitere 118 g Dipropylenglykoldiacrylat gelöst. Man erhielt ein farbloses Harz.

### Beispiel 8 (Vergleich): analog zu Beispiel 1 aus WO-A 2009/095432

In einem 2000 ml Vierhals-Glaskolben mit Rückflusskühler, beheizbarem Ölbad, mechanischem Rührer, Luftdurchleitung (2 l/h), Innenthermometer und Tropftrichter wurden 210,6g Carbowax^{®} PEG 3000 (Dow, Midland, Michigan, US), 187,2 g Carbowax^{®} PEG 4000 (Dow, Midland, Michigan, US) zusammen mit 1-Isocyanato-3,3,5-trimethyl-5-isocyanatomethyl-cyclohexan und 316 g Aceton vorgelegt und auf 50 °C erwärmt. Es wurden dann 0,8 g Dibutylzinndilaurat zugegeben und bei 60 °C etwa zwei Stunden lang gerührt. Anschließend wurden zunächst 0,8 g 2,6-Di-tert-butyl-4-methylphenol und dann 336 g Pentaerythittriacrylat zugegeben und es wurde bei 70 °C gerührt, bis ein NCO-Wert von weniger als 0,2 Gew.-% erreicht worden war. Nach Abdestillieren des Acetons unter vermindertem Druck wurde ein bei 23 °C festes Harz erhalten.

### Beispiel 9 (Vergleich): analog zu Beispiel 2 aus WO-A 2009/095432

808 g des teilacrylierten alkoxylierten Polyols 3 wurden in einem 1000 ml Vierhals-Glaskolben mit Rückflusskühler, beheizbarem Ölbad, mechanischem Rührer, Luftdurchleitung (1 l/h), Innenthermometer und Tropftrichter zusammen mit 0,44 g 2,6-Di-tert-butyl-4-methylphenol und 0,74 g Dibutylzinndilaurat vorgelegt und auf 60 °C erwärmt. Es wurden dann 40,8 g 1-Isocyanato-3,3,5-trimethyl-5-isocyanatomethyl-cyclohexan langsam zugetropft und die Mischung bei 60 °C nachgerührt, bis der NCO-Gehalt unter 0,2 Gew.-% gefallen war. Es wurde ein farbloses Harz erhalten.

### Beispiel 10 (Vergleich):

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 2235 g des teilacrylierten alkoxylierten Polyols 1, 1,5 g 2,6-Di-tert-butylkresol und 0,1 g Dibutylzinndilaurat vorgelegt und auf 50 °C erwärmt. Dann wurden 222 g 1-Isocyanato-3,3,5-trimethyl-5-isocyanatomethyl-cyclohexan so zugetropft, dass eine Temperatur von 65 °C nicht überschritten wurde. Es wurde bei 60 °C nachgerührt, bis ein NCO-Wert <0,1 Gew.-% erreicht worden war Es wurde ein klares, leicht gelbliches Harz erhalten.

### Beispiel 11 (Vergleich):

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 1414 g des teilacrylierten alkoxylierten Polyols 2, 1,5 g 2,6-Di-tert-butylkresol und 0,1 g Dibutylzinndilaurat vorgelegt und auf 50 °C erwärmt. Dann wurden 222 g 1-Isocyanato-3,3,5-trimethyl-5-isocyanatomethyl-cyclohexan so zugetropft, dass eine Temperatur von 65 °C nicht überschritten wurde. Es wurde bei 60 °C nachgerührt, bis ein NCO-Wert <0,1 Gew.-%erreicht worden war. Es wurde ein klares, leicht gelbliches Harz erhalten.

### Beispiel 12 (Vergleich):

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 447 g des teilacrylierten alkoxylierten Polyols 1, 0,5 g 2,6-Di-tert-butylkresol und 0,3 g Dibutylzinndilaurat vorgelegt und auf 50 °C erwärmt. Dann wurden eine Mischung von 46 g 1-Isocyanato-3,3,5-trimethyl-5-isocyanatomethyl-cyclohexan und 27 g Isocyanurat-Trimer von Hexamethylendiisocyanat so zugetropft, dass eine Temperatur von 65 °C nicht überschritten wurde. Es wurde bei 60 °C nachgerührt, bis ein NCO-Wert 1,2 Gew.-% erreicht worden war, und es erfolgte die Zugabe von 29 g der Lösung des PUD-Salzes. Nach 30 Minuten war der NCO-Wert auf <0,1 Gew.-% gefallen. Es wurde ein klares, leicht gelbliches Harz erhalten.

### Beispiel 13 (Vergleich):

In einem 2000 ml-Vierhals-Glaskolben mit Rückflusskühler, beheizbarem Ölbad, mechanischem Rührer, Luftdurchleitung (2 l/h), Innenthermometer und Tropftrichter wurden 447 g des teilacrylierten alkoxylierten Polyols 1, 37,5 g Polyethylenglykol 1500, 0,5 g 2,6-Di-tert-butylkresol und 0,3 g Dibutylzinndilaurat vorgelegt und auf 50 °C erwärmt. Dann wurden 46 g 1-Isocyanato-3,3,5-trimethyl-5-isocyanatomethyl-cyclohexan so zugetropft, eine Temperatur von 65 °C nicht überschritten wurde. Es wurde bei 60 °C nachgerührt, bis ein NCO-Wert 1,2 Gew.-% erreicht worden war, und es erfolgte die Zugabe von 10 g der Lösung des PUD-Salzes. Nach 30 Minuten war der NCO-Wert auf <0,1 Gew.-% gefallen. Es wurde ein klares, leicht gelbliches Harz erhalten.

**Tabelle 2: Eigenschaften der wasserverdünnbaren Polyurethan(meth)acrylate**

| **Beispiel** | **1** | **2** | **3** | **4** | **5** | **6** |
|---|---|---|---|---|---|---|
| **Viskosität bei 100% [mPa*s]** | 1950⁽¹⁾ | 2500 | 1500 | 4800⁽¹⁾ | 3250⁽¹⁾ | 5260⁽¹⁾ |
| **Alkylenoxidgehalt [Gew.-%]** | 31 | 31 | 32 | 30 | 30 | 36 |
| **Polyisocyanatgehalt [Gew.-%]** | 11,3 | 11,5 | 9,9 | 12,0 | 12,2 | 12,5 |
| **Säurezahl [mg KOH/g]** | 8,1 | 8,0 | 6,8 | 9,6 | 11,1 | 9,0 |

| | | | | | | |
|---|---|---|---|---|---|---|
| ⁽¹⁾ bei einem Festkörpergehalt von 97 Gew.-% und einem Wassergehalt von 3 Gew.-% (der Wassergehalt ist herstellungsbedingt) | | | | | | |

**Tabelle 3: Eigenschaften der wasserverdünnbaren Polyurethan(meth)acrylate (Vergleich)**

| **Beispiel** | **7 (Vgl.)** | **8 (Vgl.)** | **9 (Vgl.)** | **10 (Vgl.)** | **11 (Vgl.)** | **12 (Vgl.)** | **13 (Vgl.)** |
|---|---|---|---|---|---|---|---|
| **Viskosität bei 100% [mPa*s]** | 8000 | fest | 830 | 2300 | 6800 | 11100⁽¹⁾ | 1850⁽¹⁾ |
| **Alkylenoxidgehalt [Gew.-%]** | 56 | 50 | 44 | 34 | 57 | 30 | 36 |
| **Polyisocyanatgehalt [Gew.-%]** | 15,4 | 7,4 | 4,8 | 9,0 | 13,5 | 13,2 | 11,0 |
| **Säurezahl [mg KOH/g]** | 0 | 0 | 0 | 0 | 0 | 7,9 | 2,5 |

| | | | | | | | |
|---|---|---|---|---|---|---|---|
| Vgl. = Vergleich ⁽¹⁾ bei einem Festkörpergehalt von 97 Gew.-% und einem Wassergehalt von 3 Gew.-% (der Wassergehalt ist herstellungsbedingt) | | | | | | | |

### Lackformulierung und anwendungstechnische Prüfung

Die hergestellten wasserverdünnbaren Polyurethan(meth)acrylate wurden unter Scherung im Dispergator bei 2000 Umdrehungen über 10 Minuten mit 3 Gew.-% Irgacure® 500 (Mischung von Benzophenon und (1-Hydroxycyclohexyl)phenylketon der Fa. BASF SE, Ludwigshafen, DE) und der entsprechenden Menge Wasser (s. Tabelle 4 und 5) vermengt. Mittels eines Kastenrakels mit einem Spalt von 90 µm wurde die Mischung als dünner Film auf Glasplatte oder Eichenholzplatte aufgezogen. Nach UV-Bestrahlung (Quecksilbermitteldruckstrahler, IST Metz GmbH, Nürtingen, DE, 411 mJ/cm²) wurden transparente, feste Beschichtungen erhalten.

Die Filmhärte wurde vom Fachmann auf Glas durch Eindrücken des Fingernagels in den Lack geprüft und ist subjektiv. (Note 5: Der Lack bleibt unbeschädigt; Note 1: Der Lack lässt sich sehr deutlich eindrücken und wird beschädigt)

Die Stabilität des Lackes wurde bei 23 °C (RT) hinsichtlich dessen geprüft, nach wie vielen Tagen eine Phasenseparation oder eine Sedimentation stattfindet.

Die Haftung auf Eiche wurde mittels Gitterschnitt gemäß DIN EN ISO 2409 geprüft. (Note 0: Die Schnittränder sind vollkommen glatt; keines der Quadrate des Gitters ist abgeplatzt.)

Die Pendelhärte nach König wurde auf Glas gemäß DIN EN ISO 1522 geprüft.

Die Prüfung gegen Chemikalien, wie 10%ige Natronlauge oder 48%iges Ethanol, erfolgte gemäß DIN 68861-1 und DIN EN 12720 auf einer Eichenholzplatte. (Note 5: Lack bleibt unverändert, Note 1: starke Veränderung der Oberfläche, z.B. Lösen des Lackes)

**Tabelle 4: Prüfergebnisse auf Holz bzw. Glas**

| **Beispiel** | **1** | **2** | **3** | **4** | **5** | **6** |
|---|---|---|---|---|---|---|
| **Scherviskosität bei 100% [mPa*s]** | 1950⁽¹⁾ | 2500 | 1500 | 4800⁽¹⁾ | 5250⁽¹⁾ | 5260⁽¹⁾ |
| **Pendelhärte nach König [sec]** | 137 | 132 | 132 | 106 | 99 | 89 |
| **Beständigkeit gegen EtOH, 48%, 16 h, RT** | 5 | 5 | 1 | 5 | 1 | 5 |
| **Beständigkeit gegen NaOH, 10%, 16 h, RT** | 5 | 5 | 5 | 5 | 5 | 5 |
| **Haftung (Eiche)** | 4 | 4 | 4 | 4 | 4 | 4 |
| **Filmhärte** | 5 | 5 | 5 | 5 | 5 | 5 |
| **Scherviskosität bei 90% [mPa*s]** | 1280 | 1400 | 610 | 3200 | 2410 | 2100 |
| **Stabilität in Tagen** | >30 | >30 | >30 | >30 | >30 | >30 |
| **Haftung (Eiche)** | 4 | 4 | 4 | 4 | 4 | 4 |
| **Scherviskosität bei 80% [mPa*s]** | 450 | 1910 | 600 | 2950 | 4220 | 1970 |
| **Stabilität in Tagen** | >30 | 5 | 7 | >30 | >30 | >30 |
| **Haftung (Eiche)** | 0 | 0 | 0 | 0 | 0 | 0 |
| **Scherviskosität bei 70% [mPa*s]** | 300 | 1800 | 523 | 2500 | 3000 | 470 |
| **Stabilität in Tagen** | >30 | 1 | 1 | >30 | >30 | >30 |
| **Haftung (Eiche)** | 0 | 0 | 0 | 0 | 0 | 0 |
| **Scherviskosität bei 50% [mPa*s]** | 120 | 50 | 40 | 270 | 270 | 40 |
| **Stabilität in Tagen** | >30 | >30 | >30 | >30 | >30 | >30 |
| **Haftung (Eiche)** | | | | | | |

| | | | | | | |
|---|---|---|---|---|---|---|
| ⁽¹⁾ bei einem Festkörpergehalt von 97 Gew.-% und einem Wassergehalt von 3 Gew.-% (der Wassergehalt ist herstellungsbedingt) ⁽²⁾ Phasentrennung sofort oder wenige Minuten nach Ansetzen des Lackes | | | | | | |

**Tabelle 5: Prüfergebnisse auf Holz bzw. Glas**

| **Beispiel** | **7 (Vgl)** | **8 (Vgl)** | **9 (Vgl)** | **10 (Vgl)** | **11 (Vgl)** | **12 (Vgl)** | **13 (Vgl)** |
|---|---|---|---|---|---|---|---|
| **Scherviskosität bei 100% [mPa*s]** | 8000 | fest | 830 | 2300 | 6800 | 11100⁽¹⁾ | 1850⁽¹⁾ |
| **Pendelhärte nach König [sec]** | 26 | 70 | 40 | 73 | 114 | 120 | 73 |
| **Beständigkeit gegen EtOH, 48%, 16 h, RT** | 1 | 1 | 3 | 3 | 1 | 5 | 1 |
| **Beständigkeit gegen NaOH, 10%, 16h, RT** | 1 | 1 | 3 | 3 | 2 | 5 | 1 |
| **Haftung (Eiche)** | 4 | 4 | 4 | 4 | 4 | 4 | 4 |
| **Filmhärte** | 1 | 4 | 4 | 4 | 1 | 5 | 3 |
| **Scherviskosität bei 90% [mPa*s]** | 2000 | 11000 | 370 | 1500 | 3000 | 9130 | 1600 |
| **Stabilität in Tagen** | >30 | >30 | 10 | ₋(2) | >30 | >30 | >30 |
| **Haftung (Eiche)** | 4 | 4 | 4 | 4 | 4 | 4 | 4 |
| **Scherviskosität bei 80% [mPa*s]** | 1800 | 5000 | 330 | - | 700 | 11300 | 950 |
| **Stabilität in Tagen** | 2 | >30 | 1 | - | >30 | 5 | 2 |
| **Haftung (Eiche)** | 0 | 0 | 0 | - | 0 | 0 | 0 |
| **Scherviskosität bei 70% [mPa*s]** | 1200 | 4000 | 250 | - | 500 | 23000 | 650 |
| **Stabilität in Tagen** | 2 | >30 | 1 | - | >30 | 1 | 3 |
| **Haftung (Eiche)** | 0 | 0 | 0 | - | 0 | 0 | 0 |
| **Scherviskosität bei 50% [mPa*s]** | 180 | 7000 | - | - | ₋(2) | ₋(2) | ₋(2) |
| **Stabilität in Tagen** | 1 | >30 | ₋(2) | - | - | - | - |
| **Haftung (Eiche)** | 0 | 0 | 0 | - | - | - | - |

| | | | | | | | |
|---|---|---|---|---|---|---|---|
| (Vgl): Vergleich ⁽¹⁾ bei einem Festkörpergehalt von 97 Gew.-% und einem Wassergehalt von 3 Gew.-% (der Wassergehalt ist herstellungsbedingt) ⁽²⁾ Phasentrennung sofort oder wenige Minuten nach Ansetzen des Lackes | | | | | | | |

Die erfindungsgemäßen Beispiele (Tabelle 4) zeigen alle niedrige und gut zu verarbeitende Scherviskositäten bei einem Festkörpergehalt von 100 Gew.-% bzw. 97 Gew.-% von 1500-5260 mPas. Sie sind auch alle im Sinne der Erfindung wasserverdünnbar. Bei Wassergehalten von ≥20 Gew.-% werden für erfindungsgemäßen Beispiele sehr gute Haftungsergebnisse erreicht. Die Pendelhärten nach König nach Strahlenhärtung liegen allesamt oberhalb von 89 Sekunden und wurden als hohe Filmhärte vom Fachmann beurteilt (Note = 5). Die erfindungsgemäßen wasserverdünnbaren Bindemittel weisen ausreichende Stabilitäten auf. Die Beständigkeiten gegenüber Chemikalien sind sehr gut.

Beispiel 10 (Vergleich) ist analog zu Beispiel 1 aufgebaut, besitzt aber keine ionischen Gruppen (Komponente (d)) (Tabelle 5). Der Lack fällt bereits bei einem Festkörpergehalt von 90 Gew.-% direkt nach Einrühren des Wassers auseinander.

Der Austausch des gering alkoxylierten, teilacrylierten Polyols 1 durch das höher alkoxylierte, teilacrylierte alkoxylierten Polyols 2 in Beispiel 11 (Vergleich) führt zwar zu einer sehr guten Wasserverdünnbarkeit, der resultierende hohe Alkylenoxidgehalt im Bindemittel führt jedoch zu einer schlechten Filmhärte und zu schlechten Beständigkeiten gegenüber Chemikalien.

Der teilweise Einbau eines trifunktionellen Isocyanats in Beispiel 12 (Vergleich) führt zu einer hohen Ausgangsviskosität. Zudem ist das Bindemittel nicht wasserverdünnbar im Sinne der Erfindung.

Die Beispiele 7, 8 und 9 (Vergleich) sind zwar wasserverdünnbar, allerdings ist die Stabilität der Beispiele 7 und 9 bei Festkörpergehalten von ≤80 Gew.-% ungenügend. Beispiel 8 (Vergleich) ist bei 100 Gew.-% Festkörpergehalt fest, was auf den hohen Anteil an Polyethylenglykol zurückzuführen ist. Daher muss Beispiel 8 vor der Verdünnung mit Wasser aufgeschmolzen werden, was einen Nachteil in der Handhabung darstellt.

Die Pendelhärte nach König ist für die Beispiele 7 bis 9 gering und resultiert in weniger guten Filmhärten und größtenteils sehr schlechten Beständigkeiten gegenüber Chemikalien.

## Patentansprüche

1. Verfahren zur Herstellung von niedrigviskosen, wasserverdünnbaren Polyurethan(meth)acrylaten, **dadurch gekennzeichnet, dass** die Polyurethan(meth)acrylate erhältlich sind durch Umsetzung der Komponenten
(a) mindestens eines oder mehrerer organischer Polyisocyanate mit zwei Isocyanatfunktionen,
(b) mindestens eines Polyoxyalkylenpolyols auf Basis eines Startermoleküls mit mindestens drei Hydroxyfunktionen, das teilweise durch Veresterung mit (Meth)acrylsäure so umgesetzt ist, dass noch durchschnittlich 0,2 bis 1,5 Hydroxyfunktionen verbleiben,
(d) mindestens einer Verbindung mit mindestens einer gegenüber Isocyanat reaktiven Gruppe und mindestens einer ionischen oder potentiell ionischen Funktion,
**dadurch gekennzeichnet, dass** das Reaktionsprodukt der eingesetzten Komponenten einen NCO-Gehalt von weniger als 0,5 Gew.-% aufweist, und als Ausgangsverbindung keine Komponenten ausgewählt aus der Gruppe bestehend aus
(i) organischen Polyisocyanaten mit drei oder mehr Isocyanatfunktionen,
(ii) Polyoxyalkylenpolyolen, die maximal zwei Hydroxyfunktionen, aber keine weiteren durch aktinische Strahlung vernetzbare Gruppen aufweisen,
eingesetzt werden.

2. Verfahren gemäß Anspruch 1, **dadurch gekennzeichnet, dass** als Komponente (c) mindestens ein Hydroxyalkyl(meth)acrylat enthalten ist.

3. Verfahren gemäß Anspruch 1 oder 2, **dadurch gekennzeichnet, dass** als Komponente (e) eine organische Verbindung, die eine oder zwei isocyanatreaktive Funktionen und ein Molekulargewicht von weniger als 240 g/mol aufweist enthalten ist.

4. Verfahren gemäß einem der Ansprüche 1 bis 3, **dadurch gekennzeichnet, dass** die Polyurethan(meth)acrylate weniger als 40 Gew.-% Alkylenoxideinheiten enthalten.

5. Verfahren gemäß einem der Ansprüche 1 bis 4, **dadurch gekennzeichnet, dass** Komponente (d) mindestens eine Verbindung mit mindestens einer gegenüber Isocyanat reaktiven Gruppe und mindestens einer potentiell anionischen Gruppe (d2.1) ist.

6. Verfahren gemäß Anspruch 5, **dadurch gekennzeichnet, dass** Komponente (d) ausgewählt ist aus der Gruppe bestehend aus den Additionsprodukten von Acrylsäure an Diamine im Verhältnis 1:1.

7. Verfahren gemäß einem der Ansprüche 1 bis 6, **dadurch gekennzeichnet, dass** Komponente (a) in Mengen von 8 bis 40 Gew.-%, Komponente (b) in Mengen von 40 bis 90 Gew.-%, Komponente (c) in Mengen von 0 bis 20 Gew.-%, Komponente (d) in Mengen von 1 bis 6 Gew.-% und Komponente (e) in Mengen von 0 bis 20 Gew.-% eingesetzt, wobei sich die Summe der Gew.-% der Komponenten (a) bis (e) zu 100 addiert.

8. Wasserverdünnbare Polyurethan(meth)acrylate, erhältlich nach dem Verfahren gemäß einem der Ansprüche 1 bis 7.

9. Wasserverdünnbare Polyurethan(meth)acrylate gemäß Anspruch 8 für die Herstellung von Beschichtungen, insbesondere von Lacken und Klebstoffen.

10. Beschichtungsmittel enthaltend die wasserverdünnbaren Polyurethan(meth)acrylate gemäß Anspruch 8.

11. Beschichtungsmittel enthaltend
A) ein oder mehrere Urethan(meth)acrylate gemäß Anspruch 8,
B) von A) verschiedene Verbindungen, die unter Einwirkung aktinischer Strahlung mit ethylenisch ungesättigten Verbindungen unter Polymerisation reagierende Gruppen aufweisen,
C) nicht strahlenhärtbare, wässrige Bindemittel
D) Initiatoren,
E) gegebenenfalls Wasser und/oder Lösemittel
F) gegebenenfalls Hilfs- und Zusatzstoffe.

12. Beschichtungsmittel enthaltend
A) ein oder mehrere Urethan(meth)acrylate gemäß Anspruch 8,
B) in Wasser gelöste oder dispergierte Verbindungen, die ungesättigte, strahlenhärtbare Gruppen enthalten,
C) in Wasser gelöste oder dispergierte Verbindungen, die keine ungesättigten, strahlenhärtbaren Gruppen enthalten,
D) Initiatoren,
E) gegebenenfalls Wasser und/oder Lösemittel
F) gegebenenfalls Hilfs- und Zusatzstoffe.

13. Verwendung der Beschichtungsmittel gemäß Anspruch 10 zur Herstellung von Beschichtungen von Holz, holzartigen Substraten, Kork und cellulosefaser-haltigen Substraten.

14. Substrate beschichtet mit den Beschichtungsmitteln gemäß Anspruch 10.

## Claims

1. Process for preparing low-viscosity, water-dilutable polyurethane (meth)acrylates, **characterized in that** the polyurethane (meth)acrylates are obtainable by reaction of the following components:
(a) at least one or more organic polyisocyanates having two isocyanate functions,
(b) at least one polyoxyalkylene polyol based on a starter molecule having at least three hydroxyl functions, which has been partially reacted by esterification with (meth)acrylic acid such that there are still on average 0.2 to 1.5 hydroxyl functions remaining,
(d) at least one compound having at least one isocyanate-reactive group and at least one ionic or potentially ionic function,
**characterized in that** the reaction product of the components used has an NCO content of less than 0.5 wt%, and as starting compound no components selected from the group consisting of
(i) organic polyisocyanates having three or more isocyanate functions,
(ii) polyoxyalkylene polyols which have not more than two hydroxyl functions, but have no other groups crosslinkable by actinic radiation,
are employed.

2. Process according to Claim 1, **characterized in that** at least one hydroxyalkyl (meth)acrylate is included as component (c).

3. Process according to Claim 1 or 2, **characterized in that** an organic compound which has one or two isocyanate-reactive functions and a molecular weight of less than 240 g/mol is included as component (e).

4. Process according to any of Claims 1 to 3, **characterized in that** the polyurethane (meth)-acrylates contain less than 40 wt% of alkylene oxide units.

5. Process according to any of Claims 1 to 4, **characterized in that** component (d) is at least one compound having at least one isocyanate-reactive group and at least one potentially anionic group (d2.1).

6. Process according to Claim 5, **characterized in that** component (d) is selected from the group consisting of the adducts of acrylic acid with diamines in a ratio of 1:1.

7. Process according to any of Claims 1 to 6, **characterized in that** component (a) is used in amounts of 8 to 40 wt%, component (b) in amounts of 40 to 90 wt%, component (c) in amounts of 0 to 20 wt%, component (d) in amounts of 1 to 6 wt% and component (e) in amounts of 0 to 20 wt%, the sum of the wt% of components (a) to (e) adding up to 100.

8. Water-dilutable polyurethane (meth)acrylates, obtainable by the process according to any of Claims 1 to 7.

9. Water-dilutable polyurethane (meth)acrylates according to Claim 8 for producing coatings, more particularly paints, varnishes and adhesives.

10. Coating compositions comprising the water-dilutable polyurethane (meth)acrylates according to Claim 8.

11. Coating compositions comprising
A) one or more urethane (meth)acrylates according to Claim 8,
B) compounds different from A), which have groups which react, with polymerization, with ethylenically unsaturated compounds on exposure to actinic radiation,
C) non-radiation-curable, aqueous binders,
D) initiators,
E) optionally water and/or solvents,
F) optionally auxiliaries and adjuvants.

12. Coating compositions comprising
A) one or more urethane (meth)acrylates according to Claim 8,
B) compounds in dispersion or solution in water that contain unsaturated, radiation-curable groups,
C) compounds in dispersion or solution in water that contain no unsaturated, radiation-curable groups,
D) initiators,
E) optionally water and/or solvents,
F) optionally auxiliaries and adjuvants.

13. Use of the coating compositions according to Claim 10 for producing coatings on wood, wood-like substrates, cork and cellulose fibre-containing substrates.

14. Substrates coated with the coating compositions according to Claim 10.

## Revendications

1. Procédé pour la préparation de polyuréthane-(méth)acrylates diluables à l'eau, de basse viscosité, **caractérisé en ce que** les polyuréthane-(méth)acrylates peuvent être obtenus par transformation des composants
(a) au moins un ou plusieurs polyisocyanates organiques comprenant deux fonctions isocyanate,
(b) au moins un polyoxyalkylènepolyol à base d'une molécule de départ présentant au moins trois fonctions hydroxy, qui est en partie transformé par estérification avec de l'acide (méth)acrylique de manière telle qu'il reste en moyenne encore 0,2 à 1,5 fonctions hydroxy,
**caractérisé en ce que** le produit de réaction des composants utilisés présente une teneur en NCO inférieure à 0,5% en poids et qu'on n'utilise, comme composé de départ, pas de composants choisis dans le groupe constitué par
(i) les polyisocyanates organiques présentant trois fonctions isocyanate ou plus,
(ii) les polyoxyalkylènepolyols qui présentent au maximum deux fonctions hydroxy mais pas d'autres groupes réticulables par un rayonnement actinique.

2. Procédé selon la revendication 1, **caractérisé en ce que** comme composant (c), au moins un (méth)acrylate d'hydroxyalkyle est contenu.

3. Procédé selon la revendication 1 ou 2, **caractérisé en ce qu'**un composé organique qui présente une ou deux fonctions réactives avec isocyanate et un poids moléculaire inférieur à 240 g/mole est contenu comme composant (e).

4. Procédé selon l'une quelconque des revendications 1 à 3, **caractérisé en ce que** les polyuréthane-(méth)acrylates contiennent moins de 40% en poids d'unités d'oxyde d'alkylène.

5. Procédé selon l'une quelconque des revendications 1 à 4, **caractérisé en ce que** le composant (d) est au moins un composé présentant au moins un groupe réactif par rapport à isocyanate et au moins un groupe (d2.1) potentiellement anionique.

6. Procédé selon la revendication 5, **caractérisé en ce que** le composant (d) est choisi dans le groupe constitué par les produits d'addition d'acide acrylique sur des diamines dans un rapport 1:1.

7. Procédé selon l'une quelconque des revendications 1 à 6, **caractérisé en ce que** le composant (a) est utilisé en des quantités de 8 à 40% en poids, le composant (b) en des quantités de 40 à 90% en poids, le composant (c) en des quantités de 0 à 20% en poids, le composant (d) en des quantités de 1 à 6% en poids et le composant (e) en des quantités de 0 à 20% en poids, la somme des % en poids des composants (a) à (e) valant 100.

8. Polyuréthane-(méth)acrylates diluables à l'eau, pouvant être obtenus selon le procédé selon l'une quelconque des revendications 1 à 7.

9. Polyuréthane-(méth)acrylates diluables à l'eau selon la revendication 8 pour la préparation de revêtements, en particulier de laques et d'adhésifs.

10. Agents de revêtement contenant les polyuréthane-(méth)acrylates diluables à l'eau selon la revendication 8.

11. Agents de revêtement, contenant
A) un ou plusieurs uréthane-(méth)acrylates selon la revendication 8,
B) des composés différents de ceux de A), qui présentent des groupes réagissant avec polymérisation sous l'effet d'un rayonnement actinique avec des composés éthyléniquement insaturés,
C) des liants aqueux, non durcissables par un rayonnement,
D) des initiateurs,
E) le cas échéant de l'eau et/ou des solvants
F) le cas échéant des adjuvants et des additifs.

12. Agents de revêtement contenant
A) un ou plusieurs uréthane-(méth)acrylates selon la revendication 8,
B) des composés dissous ou dispersés dans l'eau qui contiennent des groupes insaturés, durcissables par un rayonnement,
C) des composés dissous ou dispersés dans l'eau qui ne contiennent pas de groupes insaturés durcissables par un rayonnement,
D) des initiateurs,
E) le cas échéant de l'eau et/ou des solvants
F) le cas échéant des adjuvants et des additifs.

13. Utilisation des agents de revêtement selon la revendication 10 pour la préparation de revêtements du bois, de substrats de type bois, du liège et de substrats contenant des fibres de cellulose.

14. Substrats revêtus par les agents de revêtement selon la revendication 10.
